# EUROPEAN PATENT SPECIFICATION

(11) **EP 2 933 565 B1**
(45) Date of publication and mention of the grant of the patent: **01.11.2017**
(21) Application number: 15162706.4
(22) Date of filing: 08.04.2015
(51) Int. Cl.: F24C 3/00, F16L 3/12

(54) **A COOKING DEVICE HAVING A GAS DISTRIBUTION PIPE WHOSE MOUNTING IS FACILITATED**
KOCHVORRICHTUNG MIT EINER GASVERTEILUNGSLEITUNG MIT ERLEICHTERTER MONTAGE
DISPOSITIF DE CUISSON AVEC UN TUYAU DE DISTRIBUTION DE GAZ DONT LE MONTAGE EST SIMPLIFIÉ

(30) Priority: 15.04.2014 TR 201404325
(43) Date of publication of application: 21.10.2015
(73) Proprietor: BSH Hausgeräte GmbH, 81739 München (DE)
(72) Inventor: Atabay, Emrah, 59500 TEKIRDAG (TR); Gürü, Sencer, 59850 TEKIRDAG (TR); Uygun, Ramazan, 59850 TEKIRDAG (TR)

(56) References cited:
- EP-A1- 2 857 751
- CA-A1- 2 729 060
- GB-A- 190 322 828
- US-A- 312 193
- US-A- 5 839 703
- US-A- 6 030 003
- US-A1- 2007 256 458
- US-B1- 6 454 311

## Description

The present invention relates to cooking devices like cooktops or ovens with cooktops.

The present invention particularly relates to a mounting system of a collector pipe which collects gas in order for gas to be brought separately to each of the burners of a cooktop.

Cooking devices can be in the form of a standalone cooktop or an oven with cooktop having a cooktop integrated to an oven. There is a collector pipe at the lower section of a cooktop plate of the gas operated cooktops. Collector pipe is a gas distribution pipe and it will be called as gas distribution pipe in the following specification. On the gas distribution pipe, one each gas output connection holes are formed which provide gas to pluralities of gas taps. The gas distribution pipe shall be fixed to the cooktop plate from an outer wall of a lower section. Gas distribution pipe is adapted to the cooktop in order to provide conversion to gas from electrical device or any other kind of fuel, or gas distribution pipe shall be removed in case gas usage is not desired.

Gas distribution pipe, when in mounted state, has been passed through a cutout formed on the outer wall of the plate, and in this section, it can rotate around itself when any axial force is applied. In the present art, the mounting or demounting process is in general applied by using double-nut wrench. The double-nut wrench device provides the gas distribution pipe to be mounted or demounted where one side of the gas distribution pipe is fixed by one of the wrenches and is rotated by the other wrench.

US 5,839,703 A describes an anti-rotation bracket which prevents a pipe from rotating with respect to an appliance in which it is installed. The bracket includes a U-shaped member, an attachment mechanism for securing the U-shaped member to an appliance and at least one clip extending from each of two legs of the U-shaped member for securing a rectangular crimped section of the pipe.

EP 2 857 751 A1 describes a device for fixing a pipe to a housing of a household appliance. The device comprises a receiving section to receive the pipe, wherein the receiving section comprises an anti-rotation section to prevent rotation of the pipe relatively to the receiving section.

US 6,454,311 B1 describes a gas line mounting assembly including a bracket which is adapted for being secured to a cabinet of an appliance and a gas inlet fitting attached to the bracket. The fitting has a generally rectangular body disposed within a generally rectangular aperture in the bracket. The enlargement between the rectangular body and the rectangular aperture prevent rotation of the fitting with respect to the bracket.

CA 2 729 060 A1 describes a pipe and connector assembly of an appliance. The assembly has a pipe for connecting to a fluid system of the appliance, a transition section fluidly connected to the pipe, a connector portion for connecting to the external fluid supply by way of a twisting motion between the external fluid supply and the connector portion, an anti-torque plate fixed rigidly to the transition section, the anti-torque plate having an engagement area and a shoulder element for attaching the anti-torque plate to a chassis of the appliance.

GB 22,828 A describes a means for connecting pipes to cylinders, the means comprising a flanged nut for placing on the inside of a cylinder or other vessel with lugs on said nut and to fit into and project through slots formed on the edge of a hole in a cylinder or other plate, a nipple and a washer with a nut or nuts for fixing the aforesaid nipple to which an ordinary union may be connected.

The object of the present invention is to prevent the gas distribution pipe from rotating in its own axis. In connection to this, another object of the present invention is to fix the gas distribution pipe to the cooktop plate and to facilitate the mounting and demounting processes.

In order to realize said object, the present invention is a cooking device comprising an outer body having an outer wall; a cutout formed on the outer wall; and a gas distribution pipe whose free end passes through said cutout and which extends outwardly from the outer body. The cooking device comprises a blockage element which directly fixes the gas distribution pipe from an outer periphery of the gas distribution pipe to at least an inner section of the outer body in a manner providing a counter-force against the axial rotation force to be applied to the free end, wherein at least one locking channel is provided through which the blockage element passes at least partially and which is formed on the cutout
and wherein the blockage element has a strip metal form which applies pressure to the gas distribution pipe from one face thereof. Thus, thanks to the blockage element, the gas distribution pipe is tightly fixed on the plate. Since the gas distribution pipe is fixed, the gas distribution pipe is prevented from rotating axially around itself.

In a probable embodiment of the present invention, the outer wall is an outer wall of a plate, which faces outwards. The cutout is formed on the outer wall for mounting purposes.

In a further probable embodiment of the present invention, the gas distribution pipe has a circular cross section. Thus, there is no need to change the gas flow settings of the present gas used in the cooking device. The blockage element is embodied in a form which is compliant to the circular cross section of the gas distribution pipe and which applies pressure to the gas distribution pipe from an outer section.

The cooking device comprises at least one locking channel through which the blockage element passes at least partially and which is formed on the cutout. Thus, the blockage element is fixed on the cutout.

The blockage element has a strip metal form which applies pressure to the gas distribution pipe from one face thereof. Thus, a tight fixation is provided which can be bent when required. The strip metal form, applying pressure, can be bent when required.

In a further probable embodiment of the present invention, the blockage element, which is in strip metal form, is placed on a lateral surface of the gas distribution pipe, facing outwardly, through a bearing section. Thus, the blockage element is positioned on a suitable section of the gas distribution pipe so as to be visible and accessible from outside.

In a further probable embodiment of the present invention, the blockage element, which is strip metal form, has a flexible form. This flexible form is provided thanks to the spring-like form of the extensions extending from both lateral sides of the bearing section of the blockage element. Thus, the blockage element can be bent, and it can be easily fixed to and removed from the cutout and the locking channel.

In another probable embodiment, which is not part of the present invention, the blockage element is in the form of a nut which encircles the periphery of the gas distribution pipe. Thus, the blockage element is in a form creating resistance against all stop walls provided on the periphery of the cutout.
- In Figure 1,: a frontal perspective view of the subject matter blockage element is given.
- In Figure 2,: a perspective view of a gas distribution pipe used in the present art is given.
- In Figure 3,: a perspective view of a gas distribution pipe whereto a blockage element is connected is given.
- In Figure 4,: a lateral two-dimensional view of a detailed view of the subject matter cooktop plate is given.
- In Figure 5,: a frontal perspective view of an alternative subject matter blockage element, which is not part of the present invention, is given.
- In Figure 6,: a perspective view of a gas distribution pipe whereto a blockage element according to Figure 5 is connected is given.
- In Figure 7,: the lateral two-dimensional view of a detailed view of a cooktop plate having a cutout which is compliant to an alternative blockage element given in Figure 5 is given.
- In Figure 8,: a perspective view of a cooktop plate whereto a gas distribution pipe is fixed whereon a blockage element is connected is given.
- In Figure 9,: the frontal perspective view of a cooking device, having a cooking chamber and a cooktop section, is given.

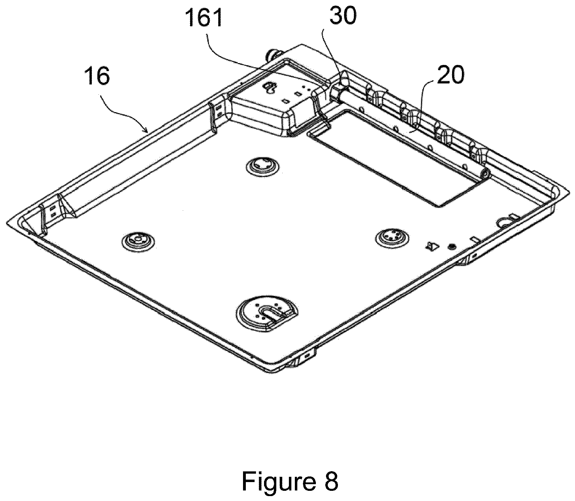

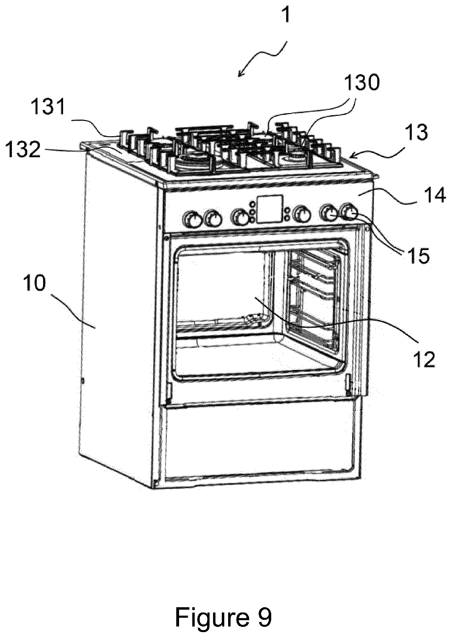

The present invention relates to a cooking device (1) having a blockage element (30) providing fixation of a gas distribution pipe (20) to a plate (16) of the cooktop (13). The subject matter blockage element (30) prevents rotation of the gas distribution pipe (20) around its own axis in an undesired manner. In Figure 8, a perspective view of a cooktop (13) plate (16) whereto a gas distribution pipe (20) is fixed whereon a blockage element (30) is connected is given. In Figure 9, the frontal perspective view of a cooking device (1), having a cooking chamber (12) and a cooktop (13) section, is given.

The location whereto the gas distribution pipe (20) is fixed is essentially a lower sheet of the plate (16). In a cooking device (1) as in Figure 9, the cooktop (13) plate (16) is integrated onto an outer body (10) of the cooking device (1). The cooktop (13) has four burner (130) compartments. The gas, applied to the burners (130), is supplied by making flow adjustments through one each gas taps (not illustrated in the figure). In order for the gas to be turned on/off or in order to make flow adjustment, a button (15) is used which can be accessed through a control panel (14) of the cooking device (1). A separate button and a separate gas tap have been installed for each burner (130). The burners (130) are positioned on a lower section of a carrier grid (131).

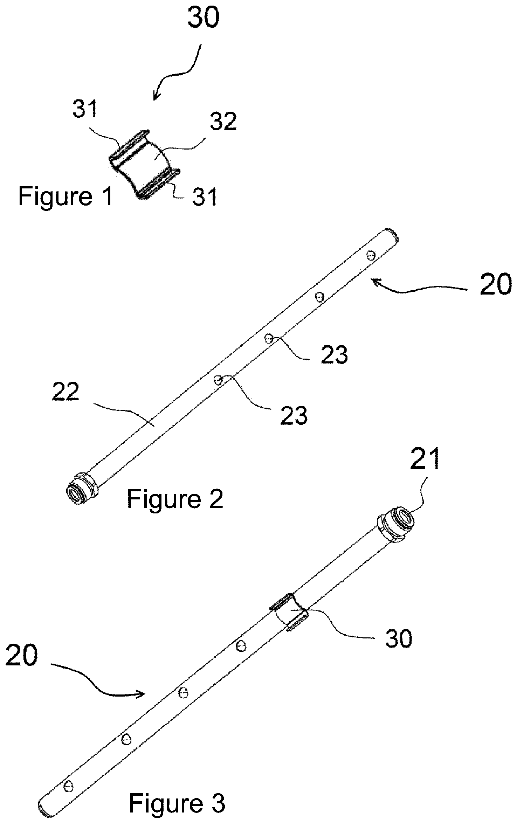

In Figure 1, a frontal perspective view of the subject matter blockage element (30) is given. The blockage element (30) has a semi-circular bearing section (32), and one each extensions (31) extending from both lateral sides of the bearing section (32). The extensions (31) have an arc-like form.

In Figure 2, a perspective view of a gas distribution pipe (20) used in the present art is given. Since a four sectioned cooktop (13) structure has been given representatively, four holes (23) are observed, providing gas to the gas taps, on the gas distribution pipe (20). The gas distribution pipe (20) is connected to a gas supply through an open free end (21). The gas distribution pipe (20) essentially has a circular cross section.

In Figure 3, a perspective view of a gas distribution pipe (20) whereto a blockage element (30) is connected is given. As can be seen in the given figure, the gas distribution pipe (20) is placed and joined to the bearing section (32) of the blockage element (30) through a lateral surface (22) of the gas distribution pipe (20). The extensions (31) of the blockage element (30) extend through the lateral surface (22) of the gas distribution pipe (20). The bearing section (32) of the blockage element (30) is formed in circular cross section in a compliant manner to the circular cross section of the gas distribution pipe (20).

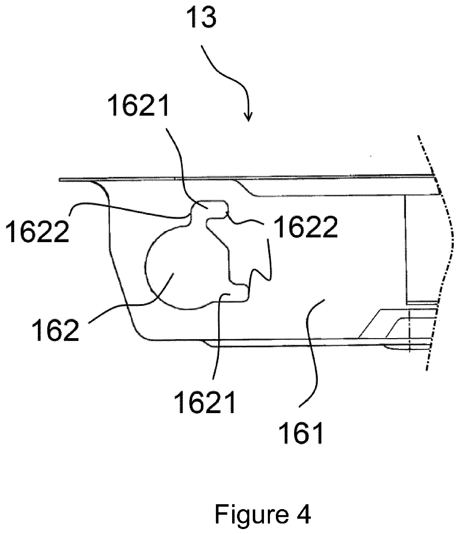

In Figure 4, a lateral two-dimensional view of a detailed view of the subject matter cooktop (13) plate (16) is given. A cutout (162) is formed on an outer wall (161) existing on an inwardly facing lateral side of the plate (16). The form of the cutout (162) is developed so as to accommodate at least one extension (31) of the blockage element (30). Accordingly, a locking channel (1621) is formed in a continued manner from the cutout (162) so as to be compliant to the form of the extension (31). An abutment edge (1622) is formed on the locking channel (1621) so as to be positioned at an angle corresponding to the rotation direction of the gas distribution pipe (20). An end of the extension (31) abuts onto the abutment edge (1622). The blockage element (30) is essentially completely provided on an inner section of the outer wall (161).

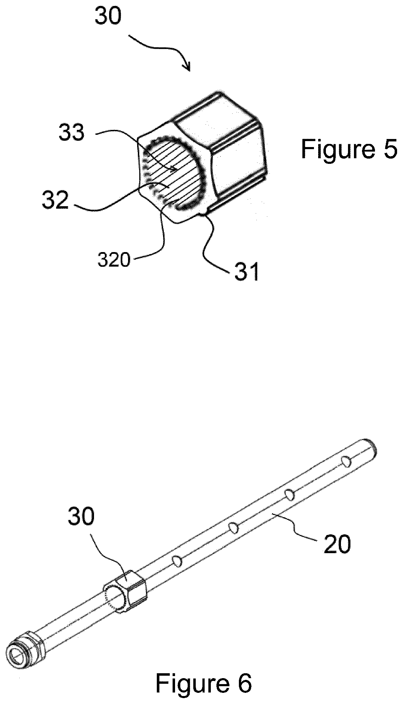

In Figure 5, a frontal perspective view of an alternative subject matter blockage element (30), which is not part of the present invention, is given. The bearing section (32) of the alternative blockage element (30) is formed in cylindrical form so as to be compliant to the cylindrical form of the gas distribution pipe (20). The bearing section (32) is the wall of a hole (33) of the blockage element (30) through which the gas distribution pipe (20) is passed. Pluralities of holder surface protrusions (320) are formed on the bearing section (32). The blockage element (30) is similar to hexagonal prism when viewed from the outer section. An extension (31) is embodied on an edge thereof. The extension (31) extends along an edge of the blockage element (30). In Figure 6, a perspective view of a gas distribution pipe (20) whereto a blockage element (30) according to Figure 5 is connected is given.

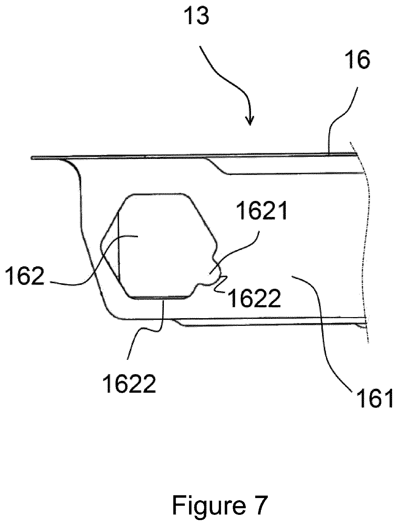

In Figure 7, the lateral two-dimensional view of a detailed view of a cooktop plate (16) having a cutout (162) which is compliant to an alternative blockage element (30) given in Figure 5 is given. Accordingly, the cutout (162) is formed so as to be compliant to an outer section of the blockage element (30) and it has a locking channel (1621).

As can be seen in Figure 8, the gas distribution pipe (20) is fixed to the locking channel (1621) so as to extend in a parallel manner with respect to an edge of the plate (16). In Figure 9, the gas distribution pipe (20) exists in an inner section of the cooking device (1) since the plate (16) is installed in the lower side of the plate (13) and in an inner section of the cooking device (1).

In more details, the operation of the present invention is as follows. A blockage element (30) as in Figure 1 or 5 is fixed onto the gas distribution pipe (20). Pluralities of methods are used for reinforcing the fixation between the gas distribution pipe (20) and the blockage element (30). One of these methods is welding. The holder surface protrusions (320), which are provided on the bearing section (32), support reinforcing of fixation by means of welding process. During mounting, the gas distribution pipe (20) is passed through the cutout (162) of the plate (16) of the cooktop (13).

The gas distribution pipe (20) is prevented from rotating around its own axis, since an extension (31), provided on the blockage element (30), engages to a locking channel (1621) of the cutout (162). Therefore, the extension (31) of the blockage element (30) is a preventive element which prevents rotation. The extension (31) of the blockage element (30) is stopped onto the abutment edges (1622) of the locking channel (1621) from the edges or from the end section thereof. As a result of the resistance of the abutment edges (1622), the rotation or movement of the gas distribution pipe (20) is restricted, where the gas distribution pipe (20) is fixed to the blockage element (30) and the blockage element (30) is integrated to the extension (31). Thus, the mounting and demounting processes of the gas distribution pipe (20) are facilitated. Connection can be realized by means of only one nut wrench instead of double nut wrench. Moreover, since the gas distribution pipe (20) is prevented from rotating right or left axially around its own axis, the gas distribution pipe (20) is prevented from separating from the free end (21), and thus risk of gas leakage is also prevented.

In an alternative embodiment of the present invention, the form of the blockage element (30) is changeable. However, the form of the bearing section (32) of the blockage element (30) is compliant to the periphery of a related section of the gas distribution pipe (20), and it has at least one extension (31).

In the alternative embodiments of the present invention, the locking channel (1621) of the cutout (162), provided on the plate (16), can be formed so as to be compliant to the form of the extension (31) so as to cover the extension (31). Locking channels (1621), which is equal in number to the number of extensions (31) of the blockage element (30), are formed on the cutout (162).

In the alternative embodiments of the present invention, the method of fixation of the blockage element (30) onto the gas distribution pipe (20) can be changed. In one of these methods, one each clamping forms, which are embodied on the walls of the gas distribution pipe (20), can be provided for the blockage element (30).

### REFERENCE NUMBERS

- 1.: Cooking device
- 10.: Outer body
- 12.: Cooking chamber
- 13.: Cooktop
- 130.: Burner
- 131.: Carrier grid
- 14.: Control panel
- 15.: Button
- 16.: Plate
- 161.: Outer wall
- 162.: Cutout
- 1621.: Locking channel
- 1622.: Abutment edge

- 20.: Gas distribution pipe
- 21.: Free end
- 22.: Lateral surface
- 23.: Hole

- 30.: Blockage element
- 31.: Extension
- 32.: Bearing section
- 320.: Holder surface protrusion
- 33.: Hole

## Claims

1. A cooking device (1) comprising an outer body (10) having an outer wall (161); a cutout (162) formed on the outer wall (161); a gas distribution pipe (20) whose free end (21) passes through said cutout (162) and which extends outwardly from the outer body (10) and a blockage element (30) which directly fixes the gas distribution pipe (20) from an outer periphery of the gas distribution pipe (20) to at least an inner section of the outer body (10) in a manner providing a counter-force against the axial rotation force to be applied to the free end (21), wherein the blockage element (30) has a strip metal form which applies pressure to the gas distribution pipe (20) from one face thereof, **characterized in that** at least one locking channel (1621) is provided through which the blockage element (30) passes at least partially and which is formed on the cutout (162).

2. A cooking device (1) according to claim 1, wherein the blockage element (30) is placed on a lateral surface (22) of the gas distribution pipe (20), facing outwardly, through a bearing section (32).

3. A cooking device (1) according to claim 1 and 2, wherein the blockage element (30) has a flexible form.

## Patentansprüche

1. Kochgerät (1) mit einem Außenkörper (10) mit einer Außenwand (161), einer an der Außenwand (161) ausgebildeten Aussparung (162), einem Gasverteilungsrohr (20), dessen freies Ende (21) durch die Aussparung (162) verläuft und das von dem Außenkörper (10) aus nach außen geht, und einem Blockierelement (30), welches das Gasverteilungsrohr (20) von einem Außenumfang des Gasverteilungsrohrs (20) aus zumindest an einem Innenabschnitt des Außenkörpers (10) auf eine solche Weise direkt fixiert, dass eine Gegenkraft zu der auf das freie Ende (21) auszuübenden axialen Rotationskraft bereitgestellt wird, wobei das Blockierelement (30) eine Bandstahlform aufweist, die von einer Fläche davon aus Druck auf das Gasverteilungsrohr (20) ausübt, **dadurch gekennzeichnet, dass** mindestens ein Arretierkanal (1621) bereitgestellt ist, durch den das Blockierelement (30) zumindest teilweise verläuft und der an der Aussparung (162) ausgebildet ist.

2. Kochgerät (1) nach Anspruch 1, wobei das Blockierelement (30) über einen Lagerabschnitt (32) an einer nach außen weisenden Seitenfläche (22) des Gasverteilungsrohrs (20) angeordnet ist.

3. Kochgerät (1) nach Anspruch 1 und 2, wobei das Blockierelement (30) eine flexible Form aufweist.

## Revendications

1. Dispositif de cuisson (1) comprenant une carcasse extérieure (10) possédant une paroi extérieure (161) ; une découpe (162) constituée sur la paroi extérieure (161) ; un tuyau de distribution de gaz (20) dont l'extrémité libre (21) traverse ladite découpe (162) et qui s'étend vers l'extérieur au départ de la carcasse extérieure (10) et un élément de blocage (30) qui fixe directement le tuyau de distribution de gaz (20) au départ d'une périphérie extérieure du tuyau de distribution de gaz (20) à au moins une section intérieure de la carcasse extérieure (10) de sorte à exercer une contre-force à l'encontre de la force de rotation axiale à appliquer à l'extrémité libre (21), dans lequel l'élément de blocage (30) possède une forme de bande métallique qui exerce une pression sur le tuyau de distribution de gaz (20) au départ d'une face de celui-ci, **caractérisé en ce qu'**au moins un canal de verrouillage (1621) est prévu, à travers lequel l'élément de blocage (30) passe au moins partiellement et qui est formé sur la découpe (162).

2. Dispositif de cuisson (1) selon la revendication 1, dans lequel l'élément de blocage (30) est placé sur une surface latérale (22) du tuyau de distribution de gaz (20), faisant face vers l'extérieur, à travers une section d'appui (32).

3. Dispositif de cuisson (1) selon la revendication 1 et 2, dans lequel l'élément de blocage (30) possède une forme flexible.
